# EUROPÄISCHE PATENTSCHRIFT

(11) **EP 2 191 175 B1**
(45) Veröffentlichungstag und Bekanntmachung des Hinweises auf die Patenterteilung: **29.02.2012**
(21) Anmeldenummer: 08801137.4
(22) Anmeldetag: 07.08.2008
(51) Int. Cl.: F16K 1/12, F16K 31/04

(54) **KOAXIALVENTIL MIT EINEM ELEKTRISCHEN ANTRIEB**
COAXIAL VALVE WITH AN ELECTRIC DRIVE
SOUPAPE COAXIALE DOTÉE D'UN ENTRAÎNEMENT ÉLECTRIQUE

(30) Priorität: 10.08.2007 DE 102007037995
(43) Veröffentlichungstag der Anmeldung: 02.06.2010
(73) Patentinhaber: Astrium GmbH, 82024 Taufkirchen (DE)
(72) Erfinder: GAUSS, Adolf, 86343 Königsbrunn (DE); VOIT, Arno, 83734 Hausham (DE)
(74) Vertreter: Häußler, Henrik
(86) Internationale Anmeldenummer: PCT/DE2008/001304
(87) Internationale Veröffentlichungsnummer: WO 2009/021492

(56) Entgegenhaltungen:
- EP-A- 1 371 885
- EP-A- 1 703 185
- DE-A1- 19 960 330
- DE-A1-102005 028 584
- US-A- 4 501 298

## Beschreibung

Die Erfindung betrifft ein Koaxialventil zum Regeln und Absperren eines flüssigen oder gasförmigen Mediums, insbesondere ein Koaxialventil für kryogene Fluide. Das Koaxialventil umfasst ein Ventilgehäuse, das zumindest eine Eintrittsöffnung und eine Austrittsöffnung sowie einen diese miteinander verbindenden Strömungskanal aufweist. Es ist eine rohrförmige Ventilhülse vorgesehen, die in einem Abschnitt des Strömungskanals axial verfahrbar vorgesehen ist und die eine Einströmöffnung sowie eine Ausströmöffnung für das Medium aufweist, die beide in den Strömungskanal münden. Ein im Ventilgehäuse vorgesehener Verschlusskörper ist koaxial zur Ventilhülse angeordnet und dazu ausgebildet, die Ausströmöffnung der Ventilhülse zu verschließen. Ein Antrieb ist zum axialen Verfahren der Ventilhülse vorgesehen, wobei der Antrieb durch einen elektrischen Stellmotor und ein zwischen den Stellmotor und die Ventilhülse gekoppeltes Übertragungsteil zur Übertragung einer axialen Bewegung auf die Ventilhülse gebildet ist.

An Ventile, welche zum Regeln und Absperren eines flüssigen oder gasförmigen Mediums unter extremen Bedingungen, wie chemischer Aggressivität, sehr hoher oder sehr tiefer Temperaturen oder unter sehr hohen Drücken dienen, werden besondere Anforderungen gestellt. Ein Anwendungsbereich von Ventilen, welche dem Absperren eines flüssigen oder gasförmigen Mediums unter extremen Bedingungen dienen, sind Antriebe in der Luft- und Raumfahrt. Hier sind die Ventile einerseits extremen Temperaturen und extremen Temperaturveränderungen ausgesetzt. Bei Ventilen für flüssige und gasförmige Raketentreibstoffe kommen weitere Aufwendungen, wie große Massenströme, hohe Drücke und kurze Schaltzeiten für das Öffnen und Schließen sowie Einnehmen einer vorgegebenen Position hinzu.

In der Luft- und Raumfahrt wird ein Koaxialventil zum Absperren eines flüssigen oder gasförmigen Mediums verwendet, das einen Eintritt und einen Austritt für das abzusperrende Medium aufweisendes Ventilgehäuse, eine in dem Ventilgehäuse in Axialrichtung zwischen einer Offenstellung und einer Schließstellung und in abdichtender Beziehung zu dem Ventilgehäuse längs verschieblich gelagerte Ventilhülse, welche bei geöffnetem Ventil in Längsrichtung von dem abzusperrenden Medium durchströmt wird und einen an einem Ende der Ventilhülse koaxial zu dieser angeordneten Verschlusskörper, an welchem die Ventilhülse in Schließstellung abdichtend anliegt und von dem die Ventilhülse bei Offenstellung unter Freigabe eines Ventilöffnungsquerschnitts beabstandet ist, und einen Stellantrieb zum Öffnen und Schließen des Ventil enthält.

Ein solches, gattungsgemäßes Koaxialventil ist aus der DE 199 60 330 A1 bekannt. Bei diesem bekannten Ventil wird die Ventilhülse axial in Bezug auf den im Strömungskanal stationären Verschlusskörper mittels eines Hebelmechanismus' bewegt, der von einem außerhalb des Ventilgehäuses vorgesehenen elektrischen oder pneumatischen Stellantrieb betätigt wird. Bei diesem Ventil ist die Betätigung über den Hebelmechanismus komplex und erhöht daher in einer für Raumfahrtanwendungen inakzeptablen Weise das Fehlfunktionsrisiko.

Ein weiteres Koaxialventil ist aus der DE 10 2005 028 584 A1 bekannt. Bei diesem Ventil ist die Ventilhülse zumindest abschnittsweise an ihrem Außenumfang mit einer rillenförmigen äußeren Wendelnut versehen und im Abschnitt der rillenförmigen äußeren Wendelnut von einer zur Ventilhülse koaxialen Antriebshülse umgeben. Die Antriebshülse ist an ihrem Innenumfang mit zumindest einer rillenförmigen inneren Wendelnut versehen, die an die äußere Wendelnut angepasst ist, so dass die innere und die äußere Wendelnut über in ihnen laufende Kugeln miteinander in Eingriff stehen und so ein Kugelumfangsgetriebe eines Kugelumlaufspindelantriebs bilden. Die Antriebshülse ist im Ventilgehäuse drehbar, aber axial fest gelagert und von einem innerhalb des Ventilgehäuses vorgesehenen Antriebsmotor drehbeaufschlagt. Der Antriebsmotor und die Antriebshülse bilden unter Einbeziehung des in die Ventilhülse integrierten Abschnitts mit der rillenförmigen äußeren Wendelnut und den Kugeln den Antrieb für die Ventilhülse. Die Ventilhülse ist damit identisch mit der Spindel des so gebildeten Kugelumlaufspindelantriebs.

Ein elektro-mechanisches Koaxialventil ist ferner in der US 6,802,488 B1 beschrieben. Dieses eignet sich jedoch nicht für den Betrieb von unter Hochdruck stehenden flüssigen oder gasförmigen Medien und insbesondere nicht für kryogene Fluide. Ursache hierfür ist, dass der Spindelantrieb bei Temperaturdifferenzen bzw. höheren Drücken aufgrund einer radialen Rohrdehnung verklemmen kann bzw. schwergängig zu betätigen ist. Zum Ausgleich dieses Nachteils ist deshalb ein kräftiger Stellantrieb notwendig, der einen entsprechend hohen Energiebedarf aufweist.

Es ist daher Aufgabe der vorliegenden Erfindung, ein Koaxialventil anzugeben, das bei kompakter Bauweise einen zuverlässigen Betrieb ermöglicht und einen lediglich minimalen Energieverbrauch aufweist.

Diese Aufgabe wird durch das Koaxialventil mit den Merkmalen des Patentanspruchs 1 gelöst. Vorteilhafte Ausgestaltungen sind in den abhängigen Patentansprüchen wiedergegeben.

Durch die Erfindung wird ein Koaxialventil zum Regeln und Absperren eines flüssigen oder gasförmigen Mediums, insbesondere eines kryogenen Treibstoffs, geschaffen. Dieses umfasst ein Ventilgehäuse, das zumindest eine Eintrittsöffnung und eine Austrittsöffnung sowie einen diese miteinander verbindenden Strömungskanal aufweist. Eine rohrförmige Ventilhülse ist in einem Abschnitt des Strömungskanals axial verfahrbar vorgesehen und weist eine Einströmöffnung sowie eine Ausströmöffnung für das Medium auf, die beide in den Strömungskanal münden. Ein im Ventilgehäuse vorgesehener Verschlusskörper ist koaxial zur Ventilhülse angeordnet und dazu ausgebildet, die Einströmöffnung der Ventilhülse zu verschließen. Es ist ein Antrieb zum axialen Verfahren der Ventilhülse vorgesehen, wobei der Antrieb durch einen elektrischen Stellmotor und ein zwischen den Stellmotor und die Ventilhülse gekoppeltes Übertragungsteil zur Übertragung einer axialen Bewegung auf die Ventilhülse gebildet ist. Hierbei ist das Übertragungsteil durch eine Antriebshülse und ein Federpaket gebildet. Die zur Ventilhülse koaxiale Antriebshülse umfasst einen daran angeordneten und in Eingriff mit der Ventilhülse bringbaren Mitnehmer, um die Ventilhülse in einer ersten Richtung zu verfahren. Das zur Ventilhülse koaxiale, in axialer Richtung wirkende Federpaket, welches sich an der Antriebshülse und der Ventilhülse abstützt, ermöglicht es, die Ventilhülse in einer zu der ersten Richtung entgegengesetzten zweiten Richtung zu verfahren.

Die erste Richtung entspricht hierbei einem Öffnen des Ventils. Das Verfahren in der zweiten Richtung entspricht einem Schließen des Ventils.

Das erfindungsgemäße Koaxialventil zeichnet sich durch seine hohe Zuverlässigkeit auch unter Extrembedingungen aus. Dabei lässt sich dieses in einer kompakten, steifen koaxialen Anordnung realisieren, wodurch es leicht in Bauräume integrierbar ist. Das Koaxialventil ist zwischen Offenstellung und Schließstellung stufenlos und mit hoher Genauigkeit einstellbar. Hierbei lassen sich die hohen Verstellgeschwindigkeiten mit kleinem Energieeinsatz realisieren. Ein weiterer Vorteil ist, dass die Stellzeit zwischen Offenstellung und Schließstellung bzw. von einer vorgegebenen Stellung auf eine andere vorgegebene Stellung frei wählbar ist. Das Ventil bleibt hierbei stromlos dicht in geschlossener Position durch den Federspeicher. Es ist aufgrund nur weniger bewegter Teile robust und fehlerunempfindlich; insbesondere auch unempfindlich gegen Vibrationen des Triebwerks. Das Koaxialventil ist mit einem doppelten Dichtungssystem (Vordichtung und zweifache Hauptdichtung) mit jeweils dazwischen angeordneter Leckageleitung ausgerüstet, womit ein weitgehender Explosionsschutz erreicht wird. Durch Kapselung des Antriebes und optionaler Inertgasspülung des Innenraumes lässt sich der Explosionsschutz noch verbessern. Schon in der Standardausführung ohne Kapselung und Spülung des Motorraumes kann es in Gase und Flüssigkeiten eingetaucht betrieben werden. Ferner lässt es sich auf einfach Weise elektrisch steuern.

Gemäß einer Ausgestaltung ist das Federpaket zwischen einer Spindel, die innenumfangseitig an der Antriebshülse angeordnet ist, und einem Kugelkalottensegment, das außenumfangseitig an der Ventilhülse angeordnet ist, angeordnet. Um die stromlose Abdichtung des Ventils zu ermöglichen, kann gemäß einer weiteren Ausführungsform vorgesehen sein, das Federpaket mit einer Vorspannung zu beaufschlagen, wenn die Ventilhülse an dem Verschlusskörper anliegt.

In einer weiteren Ausgestaltung ist vorgesehen, dass die Spindel integraler Bestandteil der Antriebshülse ist. Es kann ebenso vorgesehen sein, dass das Kugelsegment integraler Bestandteil der Ventilhülse ist. Diese Varianten begünstigen eine einfache und kostengünstige Fertigung des Koaxialventils.

Eine weitere Ausbildung sieht vor, dass das Federpaket an einem sich radial erstreckenden ersten Anlageabschnitt des Kugelkalottensegmentes anliegt. Hierdurch ist eine definierte Anlagefläche für das Federpaket geschaffen, wodurch die Zuverlässigkeit des Ventils erhöht wird.

Die Krafteinleitung über das Kugelkalottensegment zum Öffnen der Ventilhülse und das vorgespannte Federpaket zum Schließen der Ventilhülse verhindert Zwangskräfte aus Winkelfehlern zwischen der Ventil- und Antriebsachse und liefert eine Zuhattekraft, zu welcher im geschlossenen Zustand keine zusätzliche Energie benötigt wird.

In einer weiteren Ausbildung ist der Mitnehmer als Stellring ausgebildet, der innenumfangseitig an der Antriebshülse angeordnet ist und der an einem dem ersten Abschnitt gegenüberliegenden zweiten Anlageabschnitt des Kugelkalottensegments eine Kraft einleitet. Hieraus ergibt sich, dass das Kugelkalottensegment an der Ventilhülse zwischen der Spindel und dem Mitnehmer angeordnet ist. Die separate Ausbildung des Mitnehmers von der Antriebshülse ermöglicht den einfachen Zusammenbau des Koaxialventils. Gemäß einer Weiterbildung weist die Kontaktfläche zwischen Kugel und Kalotte des Kugelkalottensegments eine von der Ventilhülse nach außen weg verlaufende, dem ersten Anlageabschnitt zugewandte Neigung auf. Diese Weiterbildung begünstigt eine leichtgängige axiale Verfahrbarkeit der Ventilhülse.

Gemäß einer weiteren Ausbildung ist die Antriebshülse radial verdrehfest an dem Ventilgehäuse gelagert. Dabei muss der Lastpfad geschlossen sein. Dies ist erforderlich zur Umwandlung von Rotation in axiale Bewegung. Hierdurch ist sichergestellt, dass die Antriebshülse eine kolineare Bewegung zu der Bewegungsrichtung der Ventilhülse ausführt. Neben einer verbesserten Zuverlässigkeit ist hierdurch auch die Präzision bei der Verstellung der Ventilhülse verbessert.

In einer weiteren Ausgestaltung ist die Antriebshülse von einem Rotor des Antriebsmotors umgeben und axial gegenüber diesem verfahrbar gelagert. Die koaxiale Anordnung des Motors zur Ventilhülse sorgt für einen besonders kompakten Aufbau des Koaxialventils. Dabei ist vorteilhafterweise der Rotor von einem Stator des Antriebsmotors umgeben, welcher Stator drehfest im Ventilgehäuse gelagert ist.

Es ist ferner zweckmäßig, wenn die Antriebshülse zumindest abschnittsweise an ihrem Außenumfang mit zumindest einer rillenförmigen äußeren Wendelnut versehen ist und der Rotor des Antriebmotors an seinem Innenumfang mit zumindest einer rillenförmigen inneren Wendelnut versehen ist, die derart an die äußere Wendelnut angepasst ist, dass die innere und die äußere Wendelnut über in ihnen laufende Kugeln miteinander in Eingriff stehen und so ein Kugelumlaufgetriebe eines Kugelumlaufspindelantriebs gebildet ist. Die Antriebshülse ist somit identisch mit der Spindel des so gebildeten Kugelumlaufspindelantriebs. Vorteil ist der insbesondere durch die Integration der Antriebshülse in den Kugelumlaufspindelantrieb erzielte Kompaktaufbau und das daraus resultierende geringe Gewicht und die Vibrationsfestigkeit. Ferner kann gemäß der Erfindung alternativ zur Kugelumlaufspindel auch eine Planentenrollspindel (evtl. Differentialausführung) verwendet werden; dies führt zu den gleichen Vorteilen.

In einer weiteren Ausbildung weist die Ventilhülse eine glatte Außenoberfläche auf. Zweckmäßigerweise ist die Ventilhülse dünnwandig ausgebildet, um hydraulische Kräfte klein zu halten. Ferner ist die Ventilhülse von der Spindel bzw. Antriebshülse radial entkoppelt.

Die Ventilhülse ist in einer Ausgestaltung mit zumindest zwei voneinander entfernt angeordneten Gleitlagern in dem Ventilgehäuse gelagert. Hierbei können die zumindest zwei Gleitlager unterschiedliche Durchmesser aufweisen, wodurch ein Kräfteausgleich an den Dichtsitzen realisiert ist.

In einer weiteren Ausbildung des Koaxialventils weisen die zumindest zwei Gleitlager an ihren Stirnseiten voneinander abgewandte Dichtlippen auf und sind als Integralbauteil gefertigt, um Toleranzketten und Sekundärleckpfade zu minimieren.

In einer weiteren Ausbildung des Koaxialventils werden zum Abdichten der Ventilhülse pro Lagerstelle eine Vordichtung und eine Hauptdichtung verwendet, um das Druckgefälle stufenweise zu reduzieren.

In einer weiteren Ausbildung des Koaxialventils sind zwischen je zwei Dichtlippen Entlüftungsleitungen (Ventlines) angeordnet, um das Druckgefälle zu realisieren und Lecks kontrolliert abzuführen.

In einer weiteren Ausbildung des Koaxialventils werden die Sekundärleckpfade am Gleitlager mit Hilfsdichtungen abgedichtet, um thermische Dehnungen zu kompensieren und so Lecks zu minimieren.

Bei dem erfindungsgemäßen Koaxialventil entsteht zwischen den beiden Lagerstellen ein vom Druck des abzudichtenden Mediums isolierter Innenraum. Ferner ist der Innenraum durch die ihm zugewandten Dichtlippen der Hauptdichtung frei von Leckgas und mit Inertgas konditionierbar. Darüber hinaus kann das Außengehäuse an den Trennstellen zur Steigerung der externen Dichtigkeit durch Umfangsnähte verschweißt werden.

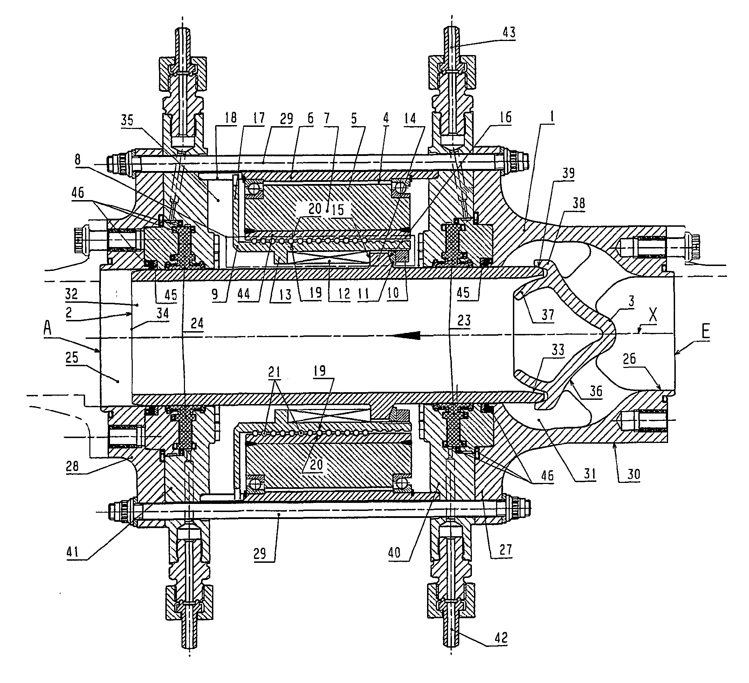

Die Erfindung wird nachfolgend anhand eines Ausführungsbeispiels näher erläutert. Die einzige Figur zeigt einen Längsschnitt durch ein erfindungsgemäßes Koaxialventil.

In einem Ventilgehäuse 1 ist ein Strömungskanal 25 vorgesehen, der eine Fluideintrittsöffnung E und eine Fluidaustrittsöffnung A aufweist. Die Fluideintrittsöffnung E und die Fluidaustrittsöffnung A sind dabei an voneinander abgewandten Enden des Ventilgehäuses 1 so ausgebildet, dass sich der Strömungskanal 25 von der Fluideintrittsöffnung E zur Fluidaustrittsöffnung A gerade erstreckt. Der Strömungskanal 25, die Fluideintrittsöffnung E und die Fluidaustrittsöffnung A sind im Querschnitt kreisförmig gestaltet und koaxial zueinander angeordnet, wobei sie eine gemeinsame Mittelachse X aufweisen.

Das erste stirnseitige Deckelteil 27 weist einen in Richtung der X-Achse nach außen hervorstehenden zylindrischen Gehäuseansatz 30 auf, der an seinem freien Ende mit der Fluideintrittsöffnung E versehen ist. Im Bereich der Fluideintrittsöffnung E ist der Strömungskanal 25 von einem ersten zylindrischen Bohrungsabschnitt 26 gebildet. Im Inneren des zylindrischen Gehäuseansatzes 30 ist ein zweiter Bohrungsabschnitt 31 des Strömungskanals 25 ausgebildet, wobei dieser Bohrungsabschnitt einen Durchmesser aufweist, der größer ist als jener des ersten zylindrischen Bohrungsabschnitts 26. Zwischen dem zweiten zylindrischen Bohrungsabschnitt 31 und dem dritten Bohrungsabschnitt 18 des Strömungskanals 25 ist im Bereich des zylindrischen Mittelabschnitts 29 des Ventilgehäuses 1 ein zylindrischer Innenraum ausgebildet, dessen Durchmesser deutlich größer ist als jener des zweiten Bohrungsabschnitts 31.

Die Fluidaustrittsöffnung A ist in einem zweiten stirnseitigen Deckelteil 28 auf der von dem ersten stirnseitigen Deckelteil abgewandten Seite des Ventilgehäuses 1 vorgesehen. Zwischen dem ersten stirnseitigen Deckelteil 27 und dem zweiten stirnseitigen Deckelteil 28 erstreckt sich ein zylindrischer Mittelabschnitt 29 des Ventilgehäuses 1. Die beiden Deckelteile 27, 28 sind mit dem zylindrischen Mittelabschnitt 29 z.B. verschraubt.

Im Strömungskanal 25 ist eine rohrförmige Ventilhülse 2 koaxial zum Strömungskanal 25 zwischen dem zweiten Bohrungsabschnitt 31 und der Fluidaustrittsöffnung A angeordnet. Die Ventilhülse 2 ist im Querschnitt kreisringförmig ausgebildet und ist entlang ihrer Achse, die mit der Mittelachse X identisch ist, verfahrbar. Die Ventilhülse 2 ist als gerades Rohr ausgebildet und umgibt einen inneren Kanal 32, der mit einer der Fluideintrittsöffnung E benachbarten stirnseitigen Einströmöffnung 33 und einer zur Fluidaustrittsöffnung A weisenden stirnseitigen Ausströmöffnung 34 versehen ist. Der innere Kanal 32 bildet auf diese Weise einen zentralen Abschnitt des Strömungskanals 25 zwischen dem ersten zylindrischen Bohrungsabschnitt 26 und der Fluidaustrittsöffnung A.

Im ersten stirnseitigen Deckelteil 27 ist im Inneren des zylindrischen Gehäuseansatzes 30, d.h. in dem Bohrungsabschnitt 31 des Strömungskanals 25, ein Verschlusskörper 3 vorgesehen, der mit der Einströmöffnung 33 der Ventilhülse 2 zum Öffnen und Schließen des Ventils zusammenhängt. Der Verschlusskörper 3 umfasst einen ringförmigen, konischen Basisabschnitt 36, der koaxial zur Mittelachse X im Bereich der Fluideintrittsöffnung E angeordnet ist. Mit dem ringförmigen Basisabschnitt 36 ist ein ringförmiger Fortsatz 37 verbunden, der ebenfalls koaxial zur Mittelachse X angeordnet ist und sich in Axialrichtung in Richtung des inneren Kanals 32 erstreckt. Die dem inneren Kanal 32 zugewandten Enden des ringförmigen Fortsatzes 37 weisen eine konvexe äußere Oberfläche auf. Diese ist einem ringförmig und im Wesentlichen zylindrisch ausgebildeten Schulterabschnitt 38 des konischen Basisabschnitts 36 zugewandt. Zwischen dem ringförmigen Fortsatz 37 und dem ringförmigen, im Wesentlichen zylindrischen Schulterabschnitt 38 ist eine ringförmige, nutförmige Anlage 39 gebildet, die einen Dichtsitz darstellt. Die Anlage 39 ist im Querschnitt kreisringförmig ausgebildet, wobei der Durchmesser an den Durchmesser der Ventilhülse 2 angepasst ist. Im Schließzustand des Ventils liegt die Ventilhülse 2 dichtend an der Anlage 39 an.

Der Verschlusskörper 3 und das erste stirnseitige Deckelteil 27 können, wie dies in der Fig. dargestellt ist, einstückig ausgebildet sein.

Die Ventilhülse 2 ist ohne Verdrehsicherung mit zwei Gleitlagern 23, 24 in dem Ventilgehäuse 1 gelagert. Die Gleitlager 23, 24 sind jeweils in einem Lagergehäuse 40 bzw. 41 angeordnet und weisen an ihren stirnseitigen Enden entgegengesetzt gerichtete Dichtlippen auf. Das Lagergehäuse 40 grenzt dabei an das erste stirnseitige Deckelteil 27 an. Das Lagergehäuse 41 grenzt an das zweite stirnseitige Deckelteil 28 an. Abschnitte der Lagergehäuse 40, 41 können über den zylindrischen Mittelabschnitt 29 hinausragen und mit diesem z.B. durch Schrauben befestigt sein. Zum Kräfteausgleich können unterschiedliche Durchmesser an den beiden durch die Gleitlager 23, 24 gebildeten Dichtsitzen vorgesehen werden.

Die Ventilhülse 2 wird an den Lagerstellen 23 und 24 (Hauptdichtung) und mit der unempfindlich gestalteten Vordichtung 45 abgedichtet. Das Leck der Vordichtung 45 wird mit der Ventline 43 z.B. in den Treibstofftank zurückgeführt. Zwischen Vordichtung und der zugewandten ersten Lippe der Hauptdichtung entsteht ein Raum mit abgesenktem Druckniveau, wodurch die Hauptdichtung geringe Leckraten erreicht, da sie nur gegen ein geringes Druckgefälle arbeitet. Dieses geringe Leck wird über die Ventline 42 gegen Umgebungsdruck oder Vakuum abgeführt. Die dem Innenraum (Motorraum) zugewandte Dichtlippe der Hauptdichtung 23 ,24 verhindert das Einsickern von Leckgas oder Luftfeuchtigkeit aus der Ventline 42. Wird der Motorraum mit Inertgas bedrückt, so dichtet sie gegen die Ventline 42 ab, um die Spülgasverluste zu minimieren. Vorteilhaft wird die Hauptdichtung 23, 24 mit Gleitlagerfunktion als Integralbauteil aus Hochleistungskunstoffen gefertigt. Bei tiefkalten Treibstoffen müssen wegen der starken Schrumpfung des Dichtungswerkstoffes relativ zum Metallgehäuse alle Sekundärleckpfade an der Dichtung mittels metallischen C-Ringen 46 zusätzlich abgedichtet werden.

In einem Innenraum 35 des Ventilgehäuses 1 ist ein Antrieb 4 vorgesehen, der die Ventilhülse 2 zur Bewegung in Axialrichtung entlang der Mittelachse X beaufschlagt und der nachstehend beschrieben wird.

Der Antrieb 4 umfasst einen innerhalb des Innenraums 35 angeordneten und als Elektromotor ausgebildeten Stellmotor 5, der die Ventilhülse 2 umgibt. Ein Stator 6 des Stellmotors 5 ist drehfest an dem zylindrischen Mittelabschnitt 29 des Ventilgehäuses 1 angeordnet. Der Stator 6 umgibt einen Rotor 7, welcher seinerseits eine Antriebshülse 9 umgibt. Die Antriebshülse 9 ist zumindest abschnittsweise außenumfangseitig mit einer rillenförmigen äußeren Wendelnut 19 versehen. Ebenso weist der Rotor 7 des Stellmotors 5 an seinem Innenumfang eine rillenförmige innere Wendelnut 22 auf. Diese kann z.B. in einer mit dem Rotor verbundenen Mutter 44 eingebracht sein, welche mit dem Rotor drehfest verbunden ist. Die innere Wendelnut 20 ist derart an die äußere Wendelnut 19 angepasst, so dass diese über in ihnen laufende Kugeln 21 miteinander in Eingriff stehen und so ein Kugelumlaufgetriebe eines Kugelumlaufspindelantriebs gebildet ist. Alternativ kann anstatt des Kugelumlaufspindelantriebs eine Planetenrollenspindel angetrieben werden. Durch eine Drehung des Rotors 7 wird hierdurch eine zu der Ventilhülse 2 koaxiale Bewegung der Antriebshülse 9 bewirkt.

Die Antriebshülse 9 weist eine reibungsarm gestaltete Verdrehsicherung 17 auf, welche durch einen sich in Richtung des zylindrischen Mittelabschnitts 29 erstreckenden Hebel realisiert sein kann Dieser grenzt mit seinem von der Antriebshülse 9 abgewandten Ende an den zylindrischen Mittelabschnitt 29 an und ist dort in Eingriff mit einem Gehäuseabschnitt 18 gebracht. Der Gehäuseabschnitt 18 kann beispielsweise integraler Bestandteil des zylindrischen Mittelabschnitts 29 sein.

Innenumfangseitig ist an der Antriebshülse 9 eine ringförmig ausgebildete Spindel 13 vorgesehen. Die ringförmige Spindel 13 ist integraler Bestandteil der Antriebshülse 9. Zwischen der ringförmigen Spindel 13 und einem außenumfangseitig an der Ventilhülse 2 angeordneten Kugelkalottensegment 14,11 ist ein Federpaket 12 vorgesehen. Das Federpaket 12 erstreckt sich ringförmig um die Ventilhülse 2 herum und liegt an einem sich radial erstreckenden ersten Anlageabschnitt 15 des Kugelkalottensegments 14 an.

Befindet sich die Ventilhülse 2, wie in der Figur dargestellt, in ihrer Schließstellung, so ist das Federpaket 12 bevorzugt mit einer Vorspannung beaufschlagt. Die Schließstellung liegt vor, wenn die Ventilhülse 2 mit ihrer Einströmöffnung 33 an der Anlage 39 des Verschlusskörpers 3 anliegt.

Das Kugelsegment 14 ist integraler Bestandteil der Ventilhülse 2 und weist einen, dem ersten Anlageabschnitt 15 gegenüberliegenden zweiten Anlageabschnitt 16 auf, der eine von der Ventilhülse 2 nach außen weg verlaufende, dem ersten Anlageabschnitt 15 zugewandte Neigung aufweist. Am Innenumfang der Antriebshülse 9 ist ein Stellring 10 befestigt, der als Mitnehmer dient und über das Kalottensegment 11 eine Kraft zum Öffnen der Ventilhülse 2 einleitet. Durch die starre Verbindung des Stellrings 10 mit der Antriebshülse 9 wird bei entsprechender Drehrichtung des Stellmotors 5 die axiale Bewegung der Antriebshülse 9 über das Kugelkalottensegment 14,11 auf die Ventilhülse 2 übertragen, wodurch sich diese von dem Verschlusskörper 3 entfernt und eine Verbindung zwischen der Einströmöffnung 33 und dem Bohrungsabschnitt 3 und der Fluidaustrittsöffnung A schafft. Das Schließen der Ventilhülse 2, das durch eine umgekehrte Drehrichtung des Stellmotors 5 eingeleitet wird, wird durch eine sich in Richtung der Fluideintrittsöffnung E erstreckende Bewegung der Antriebshülse 9 vorgenommen. Sobald die Ventilhülse 2 an ihrem Ventilsitz, der Anlage 39, zur Anlage gelangt, wird das Federpaket 12 stärker vorgespannt und der Stellmotor kann stromlos geschaltet werden, da eine Zuhaltekraft durch die mit Federvorspannung beaufschlagte Federpaket 12 vorliegt. Hierbei stützt sich das Federpaket 12 an der Spindel 13 der Antriebshülse 9 ab.

Bei der Erfindung erfolgt eine Krafteinleitung auf die Ventilhülse 2 über ein Kugelkalottensegment 14, 11, wodurch das Ventil 2 geöffnet wird. Das Schließen des Ventils erfolgt unter Zuhilfenahme eines vorgespannten Federpakets 12, das Zwangskräfte aus Winkelfehlern zwischen dem Ventil und der Antriebsachse verhindert und ferner eine Zuhaltekraft im geschlossenen Zustand liefert, ohne dass hierzu ein Stellmotor mit Strom beaufschlagt sein müsste.

Die Ventlines (Leckageleitungen) 42, 43 sind im Bauteil als radiale Bohrungen an Zwischenräume von Dichtungen geführt, um Lecks abzuleiten. Sie sind die primäre konstruktive Maßnahme, um der unkontrollierten Bildung explosiver Gemische in größerer Menge zu begegnen. Die Ventline 43 führt das Leck der Vordichtung 45 in den Treibstofftank zurück und senkt damit das Druckniveau an den zugewandten Dichtlippen der Gleitlager 23, 24 ab, wodurch deren Dichtwirkung verbessert wird. Das verbleibende kleine Leck der dynamischen Hauptdichtung am Motorraum wird mit der Ventline 42 gegen Umgebungsdruck, Vakuum oder Gettermaterial abgeführt. Die dem Motorraum zugewandten Dichtlippen der Gleitlager 23, 24 verhindern das Einschleichen von Leckgasen bzw. Feuchtigkeit in den Motorraum. In umgekehrter Richtung verhindern sie den Austritt von Inertgasgas in die Ventline, falls der Motorraum zum Schutz vor z.B. Wasserstoffversprödung bedrückt ist. Zur Verbesserung der externen Leckage bei der explosionsgeschützten Ausführung bzw. um das Eindringen von Wasser in das Ventil z.B. bei Tiefseeanwendungen zu verhindern, kann das Gehäuse durch mechanisch gering belastete Schweißnähte an den Trennstellen am Umfang hermetisch abgedichtet werden. Weiterführende Explosionsschutzmaßnahmen sind Kapselung des Motors, und Ableitung von elektrostatischen Aufladungen an den Lagerstellen.

### BEZUGSZEICHEN

- A: Fluidaustrittsöffnung
- E: Fluideintrittsöffnung
- X: Mittelachse
- 1: Ventilgehäuse
- 2: Ventilhülse
- 3: Verschlusskörper
- 4: Antrieb
- 5: Stellmotor
- 6: Stator
- 7: Rotor
- 8: Übertragungsteil
- 9: Antriebshülse
- 10: Mitnehmer (Stellring)
- 11: Kalottensegment
- 12: Federpaket
- 13: Spindel (Federgegenlager)
- 14: Kugelsegment
- 15: erster Anlageabschnitt des Kugelkalottensegments
- 16: zweiter Anlageabschnitt des Kugelkalottensegments
- 17: Verdrehsicherung der Antriebshülse
- 18: Gehäuseabschnitt des Ventilgehäuses zum Eingriff der Verdrehsicherung
- 19: äußere Wendelnut der Antriebshülse
- 20: innere Wendelnut des Rotors
- 21: Kugeln
- 22: Kugelumlaufgetriebe
- 23: Gleitlager (mit Dichtlippe)
- 24: Gleitlager (mit Dichtlippe)
- 25: Strömungskanal
- 26: erster zylindrischer Bohrungsabschnitt
- 27: erstes stirnseitiges Deckelteil
- 28: zweites stirnseitiges Deckelteil
- 29: Zuganker (zyl. Mittelabschnitt)
- 30: Gehäuseansatz
- 31: zweiter Bohrungsabschnitt
- 32: innerer Kanal
- 33: Einströmöffnung
- 34: Ausströmöffnung
- 35: Innenraum (Motorraum)
- 36: konischer Basisabschnitt
- 37: ringförmiger Fortsatz
- 38: Schulterabschnitt
- 39: Anlage (Ventilsitz)
- 40: Lagergehäuse
- 41: Lagergehäuse
- 42: Ventline Leckleitung
- 43: Ventline Leckleitung
- 44: Mutter
- 45: Vordichtung
- 46: Hilfsdichtung (Metall C-Ring)

## Patentansprüche

1. Koaxialventil zum Regeln und Absperren eines flüssigen oder gasförmigen Mediums, mit
- einem Ventilgehäuse (1), das zumindest eine Eintrittsöffnung (E) und eine Austrittsöffnung (A) sowie einen diese miteinander verbindenden Strömungskanal aufweist,
- einer rohrförmigen Ventilhülse (2), die in einem Abschnitt des Strömungskanals axial verfahrbar vorgesehen ist und die eine Einströmöffnung sowie eine Ausströmöffnung für das Medium aufweist, die beide in den Strömungskanal münden,
- einem im Ventilgehäuse (1) vorgesehenen Verschlusskörper (3), der koaxial zur Ventilhülse (2) angeordnet und dazu ausgebildet ist, die Einströmöffnung der Ventilhülse (2) zu verschließen,
- einem Antrieb (4) zum axialen Verfahren der Ventilhülse (2), wobei der Antrieb (4) durch einen elektrischen Stellmotor und ein zwischen den Stellmotor und die Ventilhülse (2) gekoppeltes Übertragungsteil (8) zur Übertragung einer axialen Bewegung auf die Ventilhülse (2) gebildet ist, **dadurch gekennzeichnet, dass**
das Übertragungsteil (8) gebildet ist durch
- eine zur Ventilhülse (2) koaxiale Antriebshülse (9) mit einem daran angeordneten und in Eingriff mit der Ventilhülse (2) bringbaren Mitnehmer (10), um die Ventilhülse (2) in einer ersten Richtung zu verfahren, und
- ein zur Ventilhülse (2) koaxiales, in axialer Richtung wirkendes Federpaket (12), welches sich an der Antriebshülse (9) und der Ventilhülse (2) abstützt, um die Ventilhülse (2) in einer zu der ersten Richtung entgegen gesetzten zweiten Richtung zu verfahren.

2. Koaxialventil nach Anspruch 1, **dadurch gekennzeichnet, dass** das Federpaket (12) zwischen einer Spindel (13), die innenumfangsseitig an der Antriebshülse (9) angeordnet ist, und einem Kugelkalottensegment (14,11), das außenumfangsseitig an der Ventilhülse (2) angeordnet ist, angeordnet ist.

3. Koaxialventil nach Anspruch 1 oder 2, **dadurch gekennzeichnet, dass** das Federpaket (12) mit einer Vorspannung beaufschlagt ist, wenn die Ventilhülse (2) an dem Verschlusskörper (3) anliegt.

4. Koaxialventil nach Anspruch 2 oder 3, **dadurch gekennzeichnet, dass** die Spindel (13) integraler Bestandteil der Antriebshülse (9) ist.

5. Koaxialventil nach einem der Ansprüche 2 bis 4, **dadurch gekennzeichnet, dass** das Kugelsegment (14) integraler Bestandteil der Ventilhülse (2) ist.

6. Koaxialventil nach einem der Ansprüche 2 bis 5, **dadurch gekennzeichnet, dass** das Federpaket (12) an einem sich radial erstreckenden ersten Anlageabschnitt des Kugelsegments (14) anliegt.

7. Koaxialventil nach einem der vorherigen Ansprüche, **dadurch gekennzeichnet, dass** der Mitnehmer (10) als Stellring ausgebildet ist, der innenumfangseitig an der Antriebshülse (9) angeordnet ist und der an einem dem ersten Abschnitt gegenüberliegenden zweiten Anlageabschnitt des Kugelsegments (14) über das Kalottensegment (11), eine Kraft einleitet.

8. Koaxialventil nach einem der vorherigen Ansprüche, **dadurch gekennzeichnet, dass** die Antriebshülse (9) radial verdrehfest an dem Ventilgehäuse (1) gelagert ist.

9. Koaxialventil nach einem der vorherigen Ansprüche, **dadurch gekennzeichnet, dass** die Antriebshülse (9) von einem Rotor (7) des Antriebsmotors umgeben ist und axial gegenüber diesem verfahrbar gelagert ist.

10. Koaxialventil nach Anspruch 9, **dadurch gekennzeichnet, dass** die Antriebshülse (9) zumindest abschnittsweise an ihrem Außenumfang mit zumindest einer rillenförmigen äußeren Wendelnut (19) versehen ist, und der Rotor (7) des Antriebsmotors an seinem Innenumfang mit zumindest einer rillenförmigen inneren Wendelnut (20) versehen ist, die derart an die äußere Wendelnut (19) angepasst ist, dass die innere und die äußere Wendelnut (19, 20) über in ihnen laufende Kugeln miteinander in Eingriff stehen und so ein Kugelumlaufgetriebe eines Kugelumlaufspindelantriebs gebildet ist oder eine innere Wendelnut, welche über Planetenrollen axial bewegt wird.

11. Koaxialventil nach einem der vorherigen Ansprüche, **dadurch gekennzeichnet, dass** die Ventilhülse (2) mit zumindest zwei voneinander entfernt angeordneten Gleitlagern (23, 24) in dem Ventilgehäuse (1) gelagert ist.

12. Koaxialventil nach Anspruch 11, **dadurch gekennzeichnet, dass** die zumindest zwei Gleitlager (23, 24) an ihren Stirnseiten voneinander abgewandte Dichtlippen aufweisen und als Integralbauteil gefertigt sind.

13. Koaxialventil nach Anspruch 11, **dadurch gekennzeichnet, dass** zum Abdichten der Ventilhülse (2) pro Lagerstelle eine Vordichtung (45) und eine Hauptdichtung (23, 24) verwendet werden.

14. Koaxialventil nach Anspruch 13, **dadurch gekennzeichnet, dass** zwischen je zwei Dichtlippen Entlüftungsleitungen angeordnet sind.

15. Koaxialventil nach Anspruch 11, **dadurch gekennzeichnet, dass** die Sekundärleckpfade am Gleitlager (23, 24) mit Hilfsdichtungen (46) abgedichtet werden.

## Claims

1. Coaxial valve for regulating and blocking off a liquid or gaseous medium, having
- a valve housing (1) which has at least one inlet opening (E) and one outlet opening (A) and also a flow duct which connects the said inlet opening and outlet opening to one another,
- a tubular valve sleeve (2) which is provided in a section of the flow duct so as to be axially movable and which has an inflow opening and also an outflow opening for the medium, which inflow opening and outflow opening both issue into the flow duct,
- a closure body (3) which is provided in the valve housing (1) and which is arranged coaxially with respect to the valve sleeve (2) and which is designed to close off the inflow opening of the valve sleeve (2),
- a drive (4) for axially moving the valve sleeve (2), with the drive (4) being formed by an electric actuating motor and a transmission part (8), which is coupled between the actuating motor and the valve sleeve (2), for transmitting an axial movement to the valve sleeve (2),
**characterized in that**
the transmission part (8) is formed by
- a drive sleeve (9) which is coaxial to the valve sleeve (2) and has a driver (10), which is arranged on the said drive sleeve and can be made to engage with the valve sleeve (2), in order to move the valve sleeve (2) in a first direction, and
- a spring pack (12), which is coaxial to the valve sleeve (2), acts in the axial direction and is supported against the drive sleeve (9) and the valve sleeve (2), in order to move the valve sleeve (2) in a second direction which is opposite to the first direction.

2. Coaxial valve according to Claim 1, **characterized in that** the spring pack (12) is arranged between a spindle (13), which is arranged on the inner circumferential face of the drive sleeve (9), and a spherical-cap segment (14, 11), which is arranged on the outer circumferential face of the valve sleeve (2).

3. Coaxial valve according to Claim 1 or 2, **characterized in that** the spring pack (12) is prestressed when the valve sleeve (2) bears against the closure body (3).

4. Coaxial valve according to Claim 2 or 3, **characterized in that** the spindle (13) is an integral constituent part of the drive sleeve (9).

5. Coaxial valve according to one of Claims 2 to 4, **characterized in that** the spherical segment (14) is an integral constituent part of the valve sleeve (2).

6. Coaxial valve according to one of Claims 2 to 5, **characterized in that** the spring pack (12) bears against a radially extending first abutment section of the spherical segment (14).

7. Coaxial valve according to one of the preceding claims, **characterized in that** the driver (10) is in the form of an actuating ring which is arranged on the inner circumferential face of the drive sleeve (9) and which introduces a force at a second abutment section of the spherical segment (14), which is situated opposite the first section, by means of the spherical-cap segment (11).

8. Coaxial valve according to one of the preceding claims, **characterized in that** the drive sleeve (9) is mounted on the valve housing (1) such that it cannot twist in the radial direction.

9. Coaxial valve according to one of the preceding claims, **characterized in that** the drive sleeve (9) is surrounded by a rotor (7) of the drive motor and is mounted such that it can move axially in relation to the said rotor.

10. Coaxial valve according to Claim 9, **characterized in that** the drive sleeve (9) is provided with at least one channel-like outer helical groove (19) at least in sections on its outer circumference, and the rotor (7) of the drive motor is provided with at least one channel-like inner helical groove (20) on its inner circumference, said inner helical groove being matched to the outer helical groove (19) in such a way that the inner and the outer helical groove (19, 20) engage with one another by means of balls which run in them and, as a result, a recirculating-ball gear mechanism of a recirculating-ball spindle drive is formed or an inner helical groove which is moved axially by means of planetary rollers.

11. Coaxial valve according to one of the preceding claims, **characterized in that** the valve sleeve (2) is mounted in the valve housing (1) by at least two sliding bearings (23, 24) which are arranged at a distance from one another.

12. Coaxial valve according to Claim 11, **characterized in that** the at least two sliding bearings (23, 24) have, at their end faces, sealing lips which are averted from one another and are produced as an integral component.

13. Coaxial valve according to Claim 11, **characterized in that** a preliminary seal (45) and a main seal (23, 24) are used for each bearing point for sealing off the valve sleeve (2).

14. Coaxial valve according to Claim 13, **characterized in that** ventilation lines are arranged between in each case two sealing lips.

15. Coaxial valve according to Claim 11, **characterized in that** the secondary leakage paths on the sliding bearing (23, 24) are sealed off by auxiliary seals (46).

## Revendications

1. Soupape coaxiale pour la régulation et le blocage d'un milieu liquide ou gazeux, comprenant :
- un boîtier de soupape (1), qui présente au moins une ouverture d'entrée (E) et une ouverture de sortie (A) ainsi qu'un canal d'écoulement reliant celles-ci l'une à l'autre,
- une douille de soupape (2) de forme tubulaire qui est prévue de manière déplaçable axialement dans une portion du canal d'écoulement et qui présente une ouverture d'afflux ainsi qu'une ouverture de sortie pour le milieu, lesquelles débouchent toutes deux dans le canal d'écoulement,
- un corps de fermeture (3) prévu dans le boîtier de soupape (1), qui est disposé coaxialement à la douille de soupape (2) et qui est réalisé de manière à fermer l'ouverture d'afflux de la douille de soupape (2),
- un entraînement (4) pour déplacer axialement la douille de soupape (2), l'entraînement (4) étant formé par un moteur de commande électrique et une partie de transfert (8) accouplée entre le moteur de commande et la douille de soupape (2) pour le transfert d'un mouvement axial à la douille de soupape (2),
**caractérisée en ce que**
la partie de transfert (8) est formée par
- une douille d'entraînement (9) coaxiale à la douille de soupape (2), avec un dispositif d'entraînement (10) disposé sur celle-ci et pouvant être amené en prise avec la douille de soupape (2), afin de déplacer la douille de soupape (2) dans une première direction, et
- un paquet de ressort (12) coaxial à la douille de soupape (2), agissant dans la direction axiale, qui s'appuie sur la douille d'entraînement (9) et sur la douille de soupape (2), afin de déplacer la douille de soupape (2) dans une deuxième direction opposée à la première direction.

2. Soupape coaxiale selon la revendication 1, **caractérisée en ce que** le paquet de ressort (12) est disposé entre une broche (13) qui est disposée du côté de la périphérie intérieure sur la douille d'entraînement (9), et un segment de calotte sphérique (14, 11) qui est disposé du côté de la périphérie extérieure sur la douille de soupape (2).

3. Soupape coaxiale selon la revendication 1 ou 2, **caractérisée en ce que** le paquet de ressort (12) est sollicité avec une précontrainte lorsque la douille de soupape (2) s'applique contre le corps de fermeture (3).

4. Soupape coaxiale selon la revendication 2 ou 3, **caractérisée en ce que** la broche (13) fait partie intégrante de la douille d'entraînement (9).

5. Soupape coaxiale selon l'une quelconque des revendications 2 à 4, **caractérisée en ce que** l'élément sphérique (14) fait partie intégrante de la douille de soupape (2).

6. Soupape coaxiale selon l'une quelconque des revendications 2 à 5, **caractérisée en ce que** le paquet de ressort (12) s'applique contre une première portion d'appui du segment sphérique (14) s'étendant radialement.

7. Soupape coaxiale selon l'une quelconque des revendications précédentes, **caractérisée en ce que** le dispositif d'entraînement (10) est réalisé sous forme de bague de réglage, qui est disposée du côté de la périphérie intérieure sur la douille d'entraînement (9), et qui introduit une force par le biais du segment de calotte (11) sur une deuxième portion d'appui du segment sphérique (14) opposée à la première portion.

8. Soupape coaxiale selon l'une quelconque des revendications précédentes, **caractérisée en ce que** la douille d'entraînement (9) est montée de manière solidaire en rotation radialement sur le boîtier de soupape (1).

9. Soupape coaxiale selon l'une quelconque des revendications précédentes, **caractérisée en ce que** la douille d'entraînement (9) est entourée par un rotor (7) du moteur d'entraînement et est montée de manière déplaçable axialement par rapport à celui-ci.

10. Soupape coaxiale selon la revendication 9, **caractérisée en ce que** la douille d'entraînement (9) est pourvue au moins en partie sur sa périphérie extérieure d'au moins une rainure hélicoïdale extérieure (19) en forme de gorge, et le rotor (7) du moteur d'entraînement est pourvu sur sa périphérie intérieure d'au moins une rainure hélicoïdale intérieure (20) en forme de gorge, qui est adaptée à la rainure hélicoïdale extérieure (19) de telle sorte que les rainures hélicoïdales intérieure et extérieure (19, 20) soient en prise l'une avec l'autre par le biais de leurs billes roulant dans celles-ci, et de telle sorte qu'un engrenage à circulation de billes d'un entraînement à broche à recirculation de billes soit formé, ou une rainure hélicoïdale intérieure, qui est déplacée axialement par le biais de rouleaux planétaires.

11. Soupape coaxiale selon l'une quelconque des revendications précédentes, **caractérisée en ce que** la douille de soupape (2) est supportée dans le boîtier de soupape (1) avec au moins deux paliers lisses (23, 24) disposés à distance l'un de l'autre.

12. Soupape coaxiale selon la revendication 11, **caractérisée en ce que** les au moins deux paliers lisses (23, 24) présentent sur leurs côtés frontaux des lèvres d'étanchéité opposées l'une à l'autre et sont fabriqués sous forme de composant intégral.

13. Soupape coaxiale selon la revendication 11, **caractérisée en ce que** pour l'étanchéité de la douille de soupape (2), on utilise à chaque emplacement de palier un joint d'étanchéité préalable (45) et un joint d'étanchéité principal (23, 24).

14. Soupape coaxiale selon la revendication 13, **caractérisée en ce que** des conduites de ventilation sont disposées entre deux lèvres d'étanchéité respectives.

15. Soupape coaxiale selon la revendication 11, **caractérisée en ce que** les chemins de fuite secondaires sur le palier lisse (23, 24) sont rendus étanches à l'aide de joints d'étanchéité auxiliaires (46).
